# EUROPEAN PATENT APPLICATION

(11) **EP 1 757 435 A1**
(43) Date of publication of application: **28.02.2007**
(21) Application number: 05018362.3
(22) Date of filing: 24.08.2005
(51) Int. Cl.: B29D 11/00, B29C 35/00

(54) **Process for the manufacture of an ophthalmic lens**

(71) Applicant: Novartis AG, 4056 Basel (CH)
(72) Inventor: The designation of the inventor has not yet been filed
(74) Representative: Liphardt, Bernd

(57) **Abstract**

A process for the manufacture of an ophthalmic lens, e.g. a contact lens, comprises the steps of:
dispensing a polymerizable and/or cross-linkable starting material comprising a photoinitiator into a mold (2, 20,21) and exposing the starting material in the mold (2,20,21) to UV-light in order to cause polymerization and/or cross-linking of the starting material in the mold so as to form the ophthalmic lens. Exposing the starting material to UV-light is performed by using at least one solid-state UV-light emitting die (80) or UV-LED (1) to the emitted light of which the starting material contained in the mold (2,20,21) is exposed.

## Description

The present invention deals with a process for the manufacture of an ophthalmic lens according to the preamble of the independent claim.

Many technical processes for the manufacturing of contact lenses are based on a photochemically induced polymerization of a monomer mixture and/or the cross-linking of functional polymers that have been dispensed into the cavity of a mold which usually comprises a male mold half and a female mold half, the cavity being formed between the shaping surfaces of the two mold halves. The light sources typically used to decompose the photoinitiator contained in the starting material are fluorescence light tubes or mercury lamps (medium or high pressure lamps). In particular mercury lamps deliver a high energy output and are therefore especially suitable for high throughput manufacturing, such as is required in the manufacture of single use lenses, which are disposed of after they have been worn.

However, mercury lamps suffer from the disadvantage that the energy output in the UV wavelength range is relatively low when compared to the input of electrical power. On the other hand, many of the photoinitiators used in contact lens manufacturing absorb light in the UV wavelength range.

Another disadvantage of medium or high pressure mercury lamps is, that most of the electrical energy consumed is converted to heat which has to be removed from the lamp. Still another disadvantage of such lamps are the operating conditions. The temperature of the quartz bulb typically is above 1000 K. While the lamp is operated best at the maximum temperature the quartz bulb is able to stand, the electrodes have to be kept at significantly lower temperatures. This requires a sophisticated cooling system.

The light exiting the mercury lamp is transported to the mold or molds where the lenses are formed. An example of how this transport of the light from the mercury lamp to the molds can be performed is shown in WO 01/000393. With the aid of a plurality of light guides one single mercury lamp can supply a plurality of molds with light, however, a sophisticated system is required to ensure a homogenous light intensity distribution in the mold cavity containing the starting material for the lens to be formed.

According to the invention, a process is suggested which should overcome the above-mentioned disadvantages of prior art manufacturing processes. The process in accordance with the present invention is characterized by the features of the independent claim. Advantageous embodiments of this process are the subject of the dependent claims.

In particular, the process for the manufacture of an ophthalmic lens, e.g. a contact lens, according to the instant invention comprises the steps of:
- dispensing a polymerizable and/or cross-linkable starting material comprising a photoinitiator into a mold
- exposing the starting material in the mold to UV-light in order to cause polymerization and/or cross-linking of the starting material in the mold so as to form the ophthalmic lens, and
- exposing the starting material to UV-light is performed by using at least one solid-state UV-light emitting die.

The use of a solid-state UV-light emitting die (typically - but not only - provided in the form of an LED comprising a solid-state light emitting die arranged in a housing) has various advantages. First of all, it emits light in a very narrow wavelength range (nearly monochromatic) and with an efficiency in converting electrical energy to light much higher than hitherto used light sources, in particular mercury lamps. Secondly, a solid-state UV-light emitting die or an LED is a more or less cold light source compared to mercury lamps - cooling systems can thus be completely omitted or are much less complicated than in mercury lamps. A further advantage is the small size of solid-state UV-light emitting dice or LEDs which allows a high flexibility in the mechanical set-up of a light housing. Due to the high efficiency of solid-state UV-light emitting dice or UV-LEDs, providing solid-state UV-light emitting dice or UV-LEDs in combination with a suitable photoinitiator in the starting material for the lens allows the set-up of a cheap and technically simple light supply for each individual mold in a clock-cycled mass production process, in which a plurality of molds are concurrently exposed to UV-light, while maintaining the short cross-linking time available for the lens forming step.

A variant of the process according to the present invention further comprises the step of homogenizing the light dose distribution in the starting material so as to cause a homogeneous light induced polymerization and/or cross-linking of the starting material. In most cases, the spatial distribution of the intensity within the beam of UV-light emitted by the solid-state UV-light emitting die or UV-LED substantially differs from a homogeneous (or even) distribution. On the other hand, in order to obtain a good quality of the manufactured lenses the light dose absorbed by the starting material at the various locations within the starting material should be substantially homogeneous. Accordingly, it is preferred to provide a step of homogenizing the light dose distribution within the staring material, and this can be achieved by different measures as will be explained in more detail below.

According to one variant of the process, for the purpose of homogenizing the light dose distribution in the starting material molds made from a light scattering material are used, and the molds are moved relative to the at least one solid-state UV-light emitting die or UV-LED thus averaging the intensity of light over time to which the starting material is exposed. This is particularly an option for the manufacturing in a double side molding process in which the polymerization process and/or cross-linking process takes comparatively long and may take some minutes, for example.

According to another variant of the process, for homogenizing the light dose distribution in the starting material a light scattering means is arranged between the at least one solid-state UV-light emitting die or UV-LED and the mold. In particular when using optically clear molds (e.g. glass molds) and starting materials the polymerization time and/or cross-linking time of which are very short, as they are used for example in highly automated processes for manufacturing single use contact lenses, it might not be easily possible to homogenize the intensity distribution through relative movement of the mold and the solid-state UV-light emitting die or UV-LED - due to the fact that the polymerization and/or cross-linking process is too fast. Therefore, a light scattering means other than the mold is arranged between the at least one solid-state UV-light emitting die or UV-LED and the mold to achieve homogenization of the light dose distribution in the starting material. The light scattering means may comprise a diffuser, a condenser, a lens array (cylindrical, round, square, rectangular), a TIR-lens, or a diffractive beam shaping element, or combinations thereof.

In a further variant of the process an arrangement of a plurality of UV-LEDs is used. This is particularly advantageous when high energy densities are desirable. Also, the arrangement of the various LEDs can be chosen such, that the overlapping inhomogeneous intensity distribution profiles of the single LEDs result in substantially homogenous intensity distribution profile. In addition, homogenizing elements such as diffusers condensers or TIR-lenses could further improve homogeneity of the intensity distribution.

In still another variant of the process, an array of adjacently arranged solid-state UV-light emitting dice is used (which may be provided in a common housing). Such an array comprising a plurality of solid-state UV-light emitting dice is advantageous also when high energy densities are desirable, and in addition the beam emitted from such an array of dice already may have a substantially homogeneous intensity distribution, so that no additional homogenizing elements may be required. However, additional homogenizing elements may nevertheless be provided in order to further improve homogeneity of the intensity distribution.

Further advantageous aspect of the invention will become apparent from the following description of embodiments of the invention with the aid of the drawings in which:
- Fig. 1: shows a first variant of the process according to the invention, in which a number of UV-LEDs are arranged spaced from each other above an conveyor for the molds;
- Fig. 2: shows a second variant of the process according to the invention, in which a diffuser is arranged within the light cone between the UV-LED and the mold;
- Fig. 3: shows a third variant of the process according to the invention, in which a lens system and a diffuser are arranged between the UV-LED and the mold;
- Fig. 4: shows a fourth variant of the process according to the invention, in which a diffractive beam shaper is arranged between the UV-LED and the mold;
- Fig. 5: shows a fifth variant of the process according to the invention, in which a plurality of UV-LEDs arranged adjacently to one another is provided, and in which a lens system and a diffuser are arranged between the UV-LEDs and the mold;
- Fig. 6: shows a sixth variant of the process according to the invention, in which a plurality of UV-LEDs arranged spaced from one another is provided, and in which lens systems and a diffuser are arranged between the UV-LEDs and the mold, and

- Fig. 7: shows a seventh variant of the process according to the invention, in which an array of solid-state UV-light emitting dice (without having a housing each) are provided, and in which a lens system and a diffuser are arranged between the array of solid-state UV-light emitting dice and the mold.

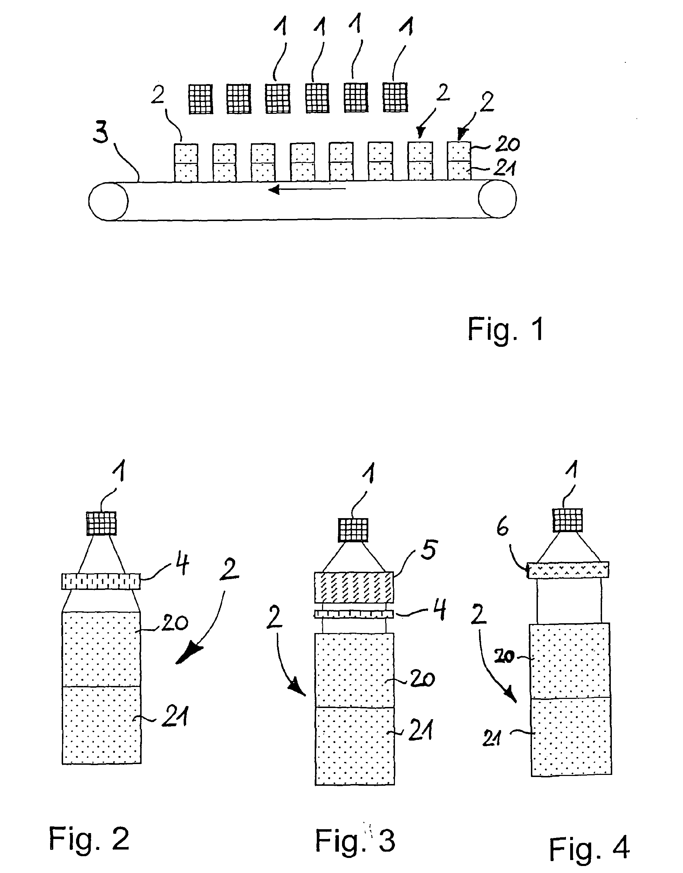

A first variant of the process according to the invention can be seen in **Fig. 1.** A plurality of UV-LEDs 1 are arranged above a conveyor belt 3 on which a number of molds 2 are arranged. Each mold 2 comprises a male mold half 20 and a female mold half 21 which form a mold cavity between the lens shaping surfaces of the respective male mold half 20 and female mold half 21. As is conventional, a starting material containing a photoinitiator can be filled into female mold half 21 prior to closing mold 2 by assembling male mold half 20 and female mold half 21. Molds 2 are made from a translucent light scattering material such as polypropylene.

The embodiment shown in Fig. 1 is a so-called double sided molding (DSM) process. The starting material used has a comparatively low polymerization and/or cross-linking rate, that is to say the polymerization and/or cross-linking process takes considerable time, e.g. in the range from one to some minutes. Molds 2 are moved through the various cones of light emitted by the UV-LEDs 1. The light dose to be absorbed by the starting material at the various locations within the mold cavity should be substantially homogenous in order to achieve a high quality of the lenses so manufactured. However, since the intensity distribution within the cone of light emitted by a single UV-LED 1 is not substantially homogenous, a substantial homogenization of the light dose absorbed by the starting material at the various locations within the mold cavity is achieved by averaging the intensity over time to which the starting material is exposed at the various locations by moving molds 2 through the various light cones of the UV-LEDs 1. While only one row of UV-LEDs 1 is shown in Fig. 1 by way of example, it may well be that a higher number of LEDs 1 may be provided along a predetermined conveying path, and molds 2 are then moved along this path through the light cones of the respective LEDs 1. It is to be noted that this embodiment is particularly suitable for a process in which the polymerization and/or cross-linking rate is comparatively low.

A second variant of the process according to the invention is shown in **Fig. 2.** According to this variant a diffuser 4 is arranged between UV-LED 1 and mold 2. In the variant shown in Fig. 2, diffuser 4 does essentially not change the angle of the cone emitted by UV-LED 1 but effects a substantially homogenous distribution of the intensity of light within the cone. As a consequence, the light dose absorbed by the starting material in the mold cavity is also substantially homogenous thus providing for a high quality of the lenses produced. In highly automated contact lens manufacturing processes, such as in processes for the manufacturing of single use lenses, it might not be possible to homogenize the intensity distribution by relative movement of molds 2 and UV-LED 1, as this has been described with the aid of Fig. 1. However, the variant according to Fig. 2 is very well suitable for such processes since diffuser 4 effects the substantially homogenous intensity distribution without any relative movement between mold 2 and UV-LED 1.

A third variant of the process according to the invention is shown in **Fig. 3.** In the aforementioned highly automated process glass molds are used that are mounted to an outer metal mount having a channel for guiding the light through female mold half to the starting material, as this is shown - for example - in WO 03/035376. However, only light entering the channel is transported to the starting material, and accordingly, in the variant shown in Fig. 2 some of the light would not be directed towards the starting material but would be reflected so that the energy contained therein is not used. In order to more or less direct the whole light emitted by UV-LED 1 to the starting material contained in the mold cavity, a lens system 5 is arranged in the light path in front of diffuser 4 so as to direct the entire light of the light cone into the channel through which it can reach the starting material. This increases the intensity and thus makes better use of the energy contained in the light cone. Diffuser 4 again serves for the homogenous distribution of the intensity.

A fourth variant of the process according to the invention is shown in **Fig. 4.** According to this variant, a diffractive beam shaper 6 (such as a holographic scattering plate) is arranged between UV-LED 1 and mold 2. Beam shaper 6 on one hand effects redirecting of the light to the channel of the mount guiding the light to the starting material in the mold 2 (see preceding paragraph and WO 03/035376) and at the same time provides for a homogeneous intensity distribution, thus providing for a homogenous light dose absorption within the starting material. Instead of a diffractive beam shaper, other suitable optical elements such as condensers, diffusers, lens arrays or combinations thereof can also be used.

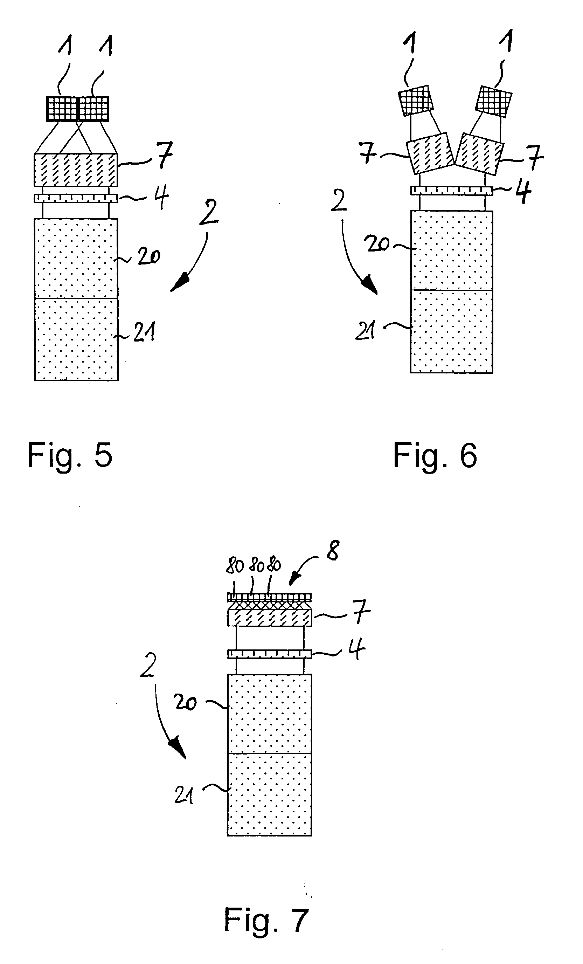

A fifth variant of the process according to the invention is shown in **Fig. 5.** According to this variant, a plurality of UV-LEDs 1 (here: two UV-LEDs 1) are arranged adjacently to one another. The light cones emitted by UV-LEDs are redirected by a lens system 7 so that the whole light of the light cones is redirected and guided towards the starting material (see preceding paragraphs). In addition, one or more optical elements such as a diffuser 4, condensers, or TIR-Ienses (Total Internal Reflection-lenses) may be provided in the light path so as to further improve homogeneity of the overall intensity distribution. Also, this variant is advantageous in as much as the energy density is higher, since the energy of the light emitted by a plurality of UV-LEDs 1 is used.

The sixth variant of the process according to the invention shown in **Fig. 6** is essentially similar to the variant shown in Fig. 5, however, the arrangement of the UV-LEDs 1 is such that they are not adjacently arranged but are spaced from one another, so that instead of one lens system 7 it may be necessary to provide a number of lens systems 7 corresponding to the number of UV-LEDs 1 for collecting the energy contained in the light cones of all UV-LEDs 1 and redirecting them to diffuser 4.

In a seventh variant of the process according to the invention shown in **Fig. 7,** an array 8 of solid-state UV-light emitting dice 80 is provided, wherein the single light emitting die 80 is not provided with a separate housing as LEDs usually are. Thus, the light emitting dice 80 of the array can be arranged very close to one another. This variant is again advantageous in that a high energy density can be produced and beam shaping by using a special design of the array or by running the dice with different currents is possible. The energy can again be guided with the aid of a suitable lens system 7 to a diffuser 4 or other suitable optical elements to improve homogeneity of the intensity distribution, as has been described hereinbefore.

Examples for suitable UV-LEDs are those manufactured by Nichia Corp, Japan, and sold under the identification number NCCU033 or NCCU0001 E having their maximum intensity of emission at a wavelength of about 360 nm and 380 nm, respectively. Commercially available photoinitiators which are suitable for the above-mentioned UV-LEDs are those manufactured by Ciba Specialty Chemicals, Basel, Switzerland, and sold under the brands Irgacure^{®} 819 or Irgacure^{®} 2020 or Darocure^{®} TPO and Darocure^{®} 4265. (Irgacure^{®} and Darocure^{®} are registered Trademarks of Ciba Speciality Chemicals Inc., Basel, Switzerland.)

Further examples for UV-LEDs which could be used, are those sold under the brand UVTOP by Sensor Electronic Technology, Inc., USA, such as UVTOP 280, UVTOP 305, UVTOP 340, having their respective maximum intensity of emission at 280 nm, 305 nm, and 340 nm, respectively. Photoinitiators which are appropriate for these UV-LEDs are, for example, those sold the brand Irgacure^{®} 2959, Irgacure^{®} 907, Irgacure^{®} 369 and Irgacure^{®} 1300, the absorption characteristics fit to the emission peaks of the mentioned UV-LEDs.

## Claims

1. Process for the manufacture of an ophthalmic lens, e.g. a contact lens, comprising the steps of:
- dispensing a polymerizable and/or cross-linkable starting material comprising a photoinitiator into a mold (2, 20,21)
- exposing the starting material in the mold (2,20,21) to UV-light in order to cause polymerization and/or cross-linking of the starting material in the mold so as to form the ophthalmic lens,
**characterized in that**
- exposing the starting material to UV-light is performed by using at least one solid-state UV-light emitting die (80,1) to the emitted light of which the starting material contained in the mold (2,20,21) is exposed.

2. Process according to claim 1, wherein a UV-LED (1) is used containing the at least one solid-state light emitting die (80).

3. Process according to claim 1 or claim 2, further comprising the step of
- homogenizing the light dose distribution in the starting material so as to cause a homogeneous light induced polymerization and/or cross-linking of the starting material.

4. Process according to claim 3, wherein for the purpose of homogenizing the light dose distribution in the starting material molds (2,20,21) made from a light scattering material are used, and wherein the molds (2,20,21) are moved (3) relative to the at least one solid-state UV-light emitting die or UV-LED (1) thus averaging the intensity of light over time to which the starting material is exposed.

5. Process according to claim 3, wherein for homogenizing the light dose distribution in the starting material a light scattering means (4) is arranged between at least one solid-state UV-light emitting die or UV-LED (1) and the mold.

6. Process according to claim 5, wherein the light scattering means comprise a diffuser (4), a condenser, a lens array, a TIR-lens, or a diffractive beam shaping element (6), or combinations thereof.

7. Process according to any one of claims 2 to 6, wherein an arrangement of a plurality UV-LEDs (1) is used.

8. Process according to any one of the preceding claims, wherein at least one array (8) of adjacently arranged solid-state UV-light emitting dice (80) is used.
